# EUROPÄISCHE PATENTSCHRIFT

(11) **EP 3 277 037 B1**
(45) Veröffentlichungstag und Bekanntmachung des Hinweises auf die Patenterteilung: **30.01.2019**
(21) Anmeldenummer: 16182107.9
(22) Anmeldetag: 29.07.2016
(51) Int. Cl.: H04W 72/04, H04W 92/20

(54) **KOMMUNIKATIONSSYSTEM FÜR DIE KOMMUNIKATION IN EINEM KOMMUNIKATIONSNETZWERK**
COMMUNICATION SYSTEM FOR COMMUNICATING IN A COMMUNICATION NETWORK
SYSTEME DE COMMUNICATION POUR LA COMMUNICATION DANS UN RESEAU DE COMMUNICATION

(43) Veröffentlichungstag der Anmeldung: 31.01.2018
(73) Patentinhaber: Deutsche Telekom AG, 53113 Bonn (DE)
(72) Erfinder: Paul, Manuel, 12683 Berlin (DE)
(74) Vertreter: Patentship Patentanwaltsgesellschaft mbH

(56) Entgegenhaltungen:
- EP-A1- 2 434 835
- EP-A1- 2 806 681
- WO-A1-2016/089270

## Beschreibung

### TECHNISCHES GEBIET

Die vorliegende Erfindung betrifft das Gebiet der Kommunikationstechnik, insbesondere der Coordinated Multi-Point (CoMP) Kommunikation in einem Kommunikationsnetzwerk.

### TECHNISCHER HINTERGRUND

In einem Kommunikationsnetzwerk, beispielsweise einem Long Term Evolution (LTE) Kommunikationsnetzwerk, kann ein Zugang eines Kommunikationsgerätes über Basisstationen, beispielsweise Evolved Node Bs (eNodeBs), erfolgen, welche untereinander über eine X2-Schnittstelle kommunizieren. Die X2-Schnittstelle kann beispielsweise zur Ressourcensteuerung, zur Koordinierung eines Handovers eines Kommunikationsgerätes sowie zur Lastverteilung zwischen den Basisstationen eingesetzt werden.

Moderne Kommunikationsnetzwerke ermöglichen ferner einen Einsatz von Multiple-Input Multiple-Output (MIMO) Technologien, wonach ein Kommunikationsgerät über mehrere Basisstationen zugleich kommunizieren kann. Hierfür kann ein Coordinated Multi-Point (CoMP) Verfahren eingesetzt werden, welches auf der MIMO-Technologie basiert. Das CoMP-Verfahren führt dabei eine Koordinierung und Kombination von Funksignalen unter Verwendung mehrerer Antennen durch. Auf diese Weise sind höhere Datenraten möglich. In den Kommunikationsnetzwerken kann hierfür ein CoMP-Controller eingesetzt werden, welcher die Basisstationen koordiniert. EP 243 48 35 A1 offenbart ein Mobilkommunikationssystem in einem Netzwerk, wobei Coordinated Multi-Point (CoMP), Übertragungsnetz verwendet wird, wobei das Netzwerk mindestens eine Basisstation umfasst, die eine Vielzahl von mobilen Endgeräten bedient.

Hinsichtlich der Datenrate des Kommunikationsgerätes kann eine bestimmte Datenrate auf der Basis einer Richtlinie bzw. Policy für das Kommunikationsgerät zugesichert sein. Ferner kann beispielsweise vorgesehen sein, nach Ablauf einer bestimmten Zeitdauer eine Datenrate des Kommunikationsgerätes zu reduzieren. Eine Reduktion der Datenraten kann ferner notwendig sein, falls in dem Kommunikationsnetzwerk unterschiedliche Datenraten unterstützt werden oder wenn einige Komponenten bestimmte Datenraten nicht unterstützen. In derartigen Fällen ist eine Reduktion der Datenrate ebenfalls wünschenswert.

### BESCHREIBUNG DER ERFINDUNG

Es ist daher eine Aufgabe der vorliegenden Erfindung, ein einfaches Konzept zur Reduktion einer Datenrate eines Kommunikationsgerätes in einem Kommunikationsnetzwerk, insbesondere einem Long Term Evolution (LTE) Kommunikationsnetzwerk, zu schaffen.

Diese Aufgabe wird durch die Merkmale der unabhängigen Ansprüche gelöst. Vorteilhafte Ausführungsformen der Erfindung sind Gegenstand der Beschreibung, der Zeichnungen sowie der abhängigen Ansprüche.

Die Erfindung basiert auf der Erkenntnis, dass die Datenrate eines Kommunikationsgerätes besonders einfach reduziert werden kann, indem eine Verzögerung einer Kommunikation zwischen Steuerungsschnittstellen, insbesondere X2-Schnittstellen, von Basisstationen bewirkt wird. Dadurch sinkt die Datenrate der Kommunikation zwischen den Steuerungsschnittstellen, woraufhin die Basisstationen sich nicht mehr schnell synchronisieren können und die Datenrate des Kommunikationsgerätes folglich sinkt.

Gemäß einem ersten Aspekt betrifft die Erfindung ein Kommunikationssystem für die Kommunikation in einem Kommunikationsnetzwerk. Das Kommunikationssystem umfasst eine erste Basisstation, welche für eine Kommunikation eines ersten Kommunikationsgerätes in dem Kommunikationsnetzwerk vorgesehen ist, wobei die erste Basisstation eine erste Steuerungsschnittstelle für die Ressourcensteuerung aufweist. Das Kommunikationssystem umfasst ferner eine zweite Basisstation, welche für eine Kommunikation eines zweiten Kommunikationsgerätes in dem Kommunikationsnetzwerk vorgesehen ist, wobei die zweite Basisstation eine zweite Steuerungsschnittstelle für die Ressourcensteuerung aufweist. Die erste Steuerungsschnittstelle und die zweite Steuerungsschnittstelle sind für eine Koordinierung der ersten Basisstation und der zweiten Basisstation in dem Kommunikationssystem vorgesehen. Das Kommunikationssystem umfasst ferner einen Controller, welcher ausgebildet ist, eine Zeitverzögerung in der Kommunikation zwischen der ersten Steuerungsschnittstelle und der zweiten Steuerungsschnittstelle zu ändern, um eine Datenrate in dem Kommunikationssystem zu ändern. Die geänderte Datenrate kann dem ersten Kommunikationsgerät oder dem zweiten Kommunikationsgerät zugeordnet sein.

Gemäß einer Ausführungsform sind die erste Steuerungsschnittstelle und die zweite Steuerungsschnittstelle X2-Schnittstellen.

Gemäß einer Ausführungsform ist die erste Basisstation ferner für eine Kommunikation mit dem zweiten Kommunikationsgerät in dem Kommunikationsnetzwerk vorgesehen, und ist die zweite Basisstation ferner für eine Kommunikation mit dem ersten Kommunikationsgerät in dem Kommunikationsnetzwerk vorgesehen. Die Kommunikation kann unter Verwendung einer Multiple-Input Multiple-Output (MIMO) Technologie und/oder einer Coordinated Multi-Point (CoMP) Technologie durchgeführt werden.

Gemäß einer Ausführungsform ist der Controller ein Coordinated Multi-Point (CoMP) Controller.

Gemäß einer Ausführungsform ist der Controller ausgebildet, eine erste kumulierte Datenrate des ersten Kommunikationsgerätes auf der Basis einer ersten Teildatenrate zwischen dem ersten Kommunikationsgerät und der ersten Basisstation und einer zweiten Teildatenrate zwischen dem ersten Kommunikationsgerät und der zweiten Basisstation zu bestimmen, und ist der Controller ausgebildet, eine zweite kumulierte Datenrate des zweiten Kommunikationsgerätes auf der Basis einer dritten Teildatenrate zwischen dem zweiten Kommunikationsgerät und der ersten Basisstation und einer vierten Teildatenrate zwischen dem zweiten Kommunikationsgerät und der zweiten Basisstation zu bestimmen. Die erste kumulierte Datenrate kann eine Summe der ersten Teildatenrate und der zweiten Teildatenrate sein. Die zweite kumulierte Datenrate kann eine Summe der dritten Teildatenrate und der vierten Teildatenrate sein.

Gemäß einer Ausführungsform ist der Controller ausgebildet, die erste kumulierte Datenrate oder die zweite kumulierte Datenrate mit einem vorbestimmten Schwellwert zu vergleichen, und die Zeitverzögerung in der Kommunikation zwischen der ersten Steuerungsschnittstelle und der zweiten Steuerungsschnittstelle zu ändern, falls die erste kumulierte Datenrate oder die zweite kumulierte Datenrate den vorbestimmten Schwellwert überschreitet.

Gemäß einer Ausführungsform ist die erste Basisstation oder die zweite Basisstation ausgebildet, ein Zeitverzögerungssignal von dem Controller zu empfangen, und, ansprechend auf den Empfang des Zeitverzögerungssignals, die Kommunikation zwischen der ersten Steuerungsschnittstelle und der zweiten Steuerungsschnittstelle um eine vorbestimmte Zeitdauer zu verzögern.

Gemäß einer Ausführungsform weist die erste Steuerungsschnittstelle oder die zweite Steuerungsschnittstelle ein steuerbares Zeitverzögerungselement auf, wobei der Controller ausgebildet ist, das steuerbare Zeitverzögerungselement zu steuern.

Gemäß einer Ausführungsform umfasst das Kommunikationssystem eine Interferenzkoordinierungsentität, welche ausgebildet ist, eine Interferenz zwischen der Kommunikation des ersten Kommunikationsgerätes mit der ersten Basisstation und der Kommunikation des zweiten Kommunikationsgerätes mit der zweiten Basisstation zu bestimmen, wobei die Interferenzkoordinierungsentität ausgebildet ist, die Zeitverzögerung in der Kommunikation zwischen der ersten Steuerungsschnittstelle und der zweiten Steuerungsschnittstelle auf der Basis der bestimmten Interferenz zu ändern.

Gemäß einer Ausführungsform ist die Interferenzkoordinierungsentität eine Inter-Cell Interference Coordination (ICIC) Entität oder eine Enhanced Inter-Cell Interference Coordination (EICIC) Entität.

Gemäß einer Ausführungsform sind die erste Basisstation und die zweite Basisstation Evolved Node Bs (eNodeBs).

Gemäß einer Ausführungsform ist das Kommunikationsnetzwerk ein Long Term Evolution (LTE) Kommunikationsnetzwerk.

Gemäß einer Ausführungsform ist das Kommunikationsnetzwerk ein Kommunikationsnetzwerk der fünften Generation (5G) oder einer weiteren Generation.

Gemäß einer Ausführungsform umfasst das Kommunikationsnetzwerk ein Subnetzwerk, insbesondere ein Slice, wobei der Controller dem Subnetzwerk, insbesondere dem Slice, zugeordnet ist.

Gemäß einem zweiten Aspekt betrifft die Erfindung ein Verfahren für die Kommunikation in einem Kommunikationsnetzwerk unter Verwendung eines Kommunikationssystems. Das Kommunikationssystem umfasst eine erste Basisstation, eine zweite Basisstation und einen Controller. Die erste Basisstation ist für eine Kommunikation eines ersten Kommunikationsgerätes in dem Kommunikationsnetzwerk vorgesehen, wobei die erste Basisstation eine erste Steuerungsschnittstelle für die Ressourcensteuerung aufweist. Die zweite Basisstation ist für eine Kommunikation eines zweiten Kommunikationsgerätes in dem Kommunikationsnetzwerk vorgesehen, wobei die zweite Basisstation eine zweite Steuerungsschnittstelle für die Ressourcensteuerung aufweist. Die erste Steuerungsschnittstelle und die zweite Steuerungsschnittstelle sind für eine Koordinierung der ersten Basisstation und der zweiten Basisstation in dem Kommunikationssystem vorgesehen. Das Verfahren umfasst ein Ändern einer Zeitverzögerung in der Kommunikation zwischen der ersten Steuerungsschnittstelle und der zweiten Steuerungsschnittstelle durch den Controller, um eine Datenrate in dem Kommunikationssystem zu ändern. Das Verfahren kann durch das Kommunikationssystem ausgeführt werden. Weitere Merkmale des Verfahrens resultieren unmittelbar aus den Merkmalen und/oder der Funktionalität des Kommunikationssystems.

Gemäß einem dritten Aspekt betrifft die Erfindung ein Computerprogramm mit einem Programmcode zum Ausführen des Verfahrens, wenn der Programmcode durch einen Prozessor ausgeführt wird. Die erste Basisstation, die zweite Basisstation und/oder der Controller können jeweils einen Prozessor zum Ausführen des Programmcodes oder eines Teils des Programmcodes umfassen.

Die Erfindung kann in Hardware und/oder in Software realisiert werden.

### BESCHREIBUNG DER FIGUREN

Weitere Ausführungsbeispiele werden bezugnehmend auf die beiliegenden Zeichnungen näher erläutert. Es zeigen:
Fig. 1 ein schematisches Diagramm eines Kommunikationssystems für die Kommunikation in einem Kommunikationsnetzwerk;
Fig. 2 ein schematisches Diagramm eines Kommunikationssystems für die Kommunikation in einem Kommunikationsnetzwerk;
Fig. 3 ein schematisches Diagramm eines Kommunikationssystems für die Kommunikation in einem Kommunikationsnetzwerk; und
Fig. 4 ein schematisches Diagramm eines Verfahrens für die Kommunikation in einem Kommunikationsnetzwerk unter Verwendung eines Kommunikationssystems.

### DETAILIERTE BESCHREIBUNG DER FIGUREN

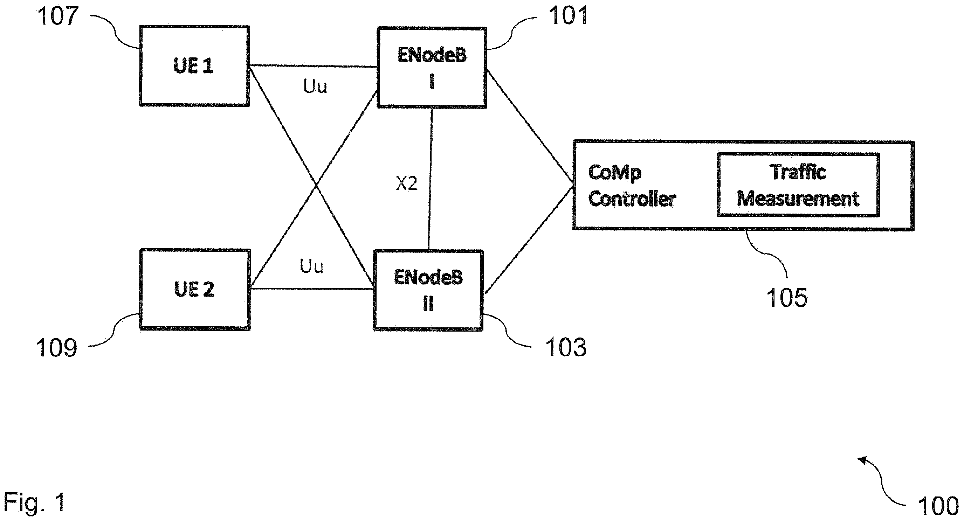

Fig. 1 zeigt ein schematisches Diagramm eines Kommunikationssystems 100 für die Kommunikation in einem Kommunikationsnetzwerk.

Das Kommunikationssystem 100 umfasst eine erste Basisstation 101, welche für eine Kommunikation eines ersten Kommunikationsgerätes 107 in dem Kommunikationsnetzwerk vorgesehen ist, wobei die erste Basisstation 101 eine erste Steuerungsschnittstelle für die Ressourcensteuerung aufweist. Das Kommunikationssystem 100 umfasst ferner eine zweite Basisstation 103, welche für eine Kommunikation eines zweiten Kommunikationsgerätes 109 in dem Kommunikationsnetzwerk vorgesehen ist, wobei die zweite Basisstation 103 eine zweite Steuerungsschnittstelle für die Ressourcensteuerung aufweist. Die erste Steuerungsschnittstelle und die zweite Steuerungsschnittstelle sind für eine Koordinierung der ersten Basisstation 101 und der zweiten Basisstation 103 in dem Kommunikationssystem 100 vorgesehen. Das Kommunikationssystem 100 umfasst ferner einen Controller 105, welcher ausgebildet ist, eine Zeitverzögerung in der Kommunikation zwischen der ersten Steuerungsschnittstelle und der zweiten Steuerungsschnittstelle zu ändern, um eine Datenrate in dem Kommunikationssystem 100 zu ändern. Die geänderte Datenrate kann dem ersten Kommunikationsgerät 107 oder dem zweiten Kommunikationsgerät 109 zugeordnet sein.

Zur Realisierung können in dem Controller 105 die Datenraten der Kommunikation eines Kommunikationsgerätes 107, 109 über die Basisstationen 101, 103 erfasst werden, um eine kumulierte Datenrate zu erhalten. Daraus wird die kumulierte Datenrate errechnet. Überschreitet die kumulierte Datenrate einen Schwellwert, so kann eine Zeitverzögerung in der Kommunikation zwischen der ersten Steuerungsschnittstelle und er zweiten Steuerungsschnittstelle, welche beispielsweise X2-Schnittstellen sind, erhöht werden. Dadurch sinkt die Datenrate des jeweiligen Kommunikationsgerätes 107, 109.

Der Controller 105 kann hierfür die Basisstationen 101, 103 anweisen, eine Zeitverzögerung an der jeweiligen Steuerungsschnittstelle um eine bestimmte Zeitdauer zu erhöhen. Die Basisstationen 101, 103 reduzieren dadurch die Datenrate auf der jeweiligen Steuerungsschnittstelle, oder warten eine vorbestimmte Zeitdauer ab, bevor über die jeweilige Steuerungsschnittstelle wieder gesendet wird. Ferner können in den jeweiligen Steuerungsschnittstellen steuerbare Zeitverzögerungselemente gesteuert oder programmiert werden, welche durch den Controller 105 gesteuert werden können. Der Controller 105 kann ein CoMP-Controller sein. Die Kommunikationsgeräte 107, 109 können UEs sein. Die Basisstationen 101, 103 können eNodeBs sein. Die Kommunikation zwischen den Kommunikationsgeräten 107, 109 und den jeweiligen Basisstationen 101, 103 kann über eine Uu-Schnittstelle erfolgen.

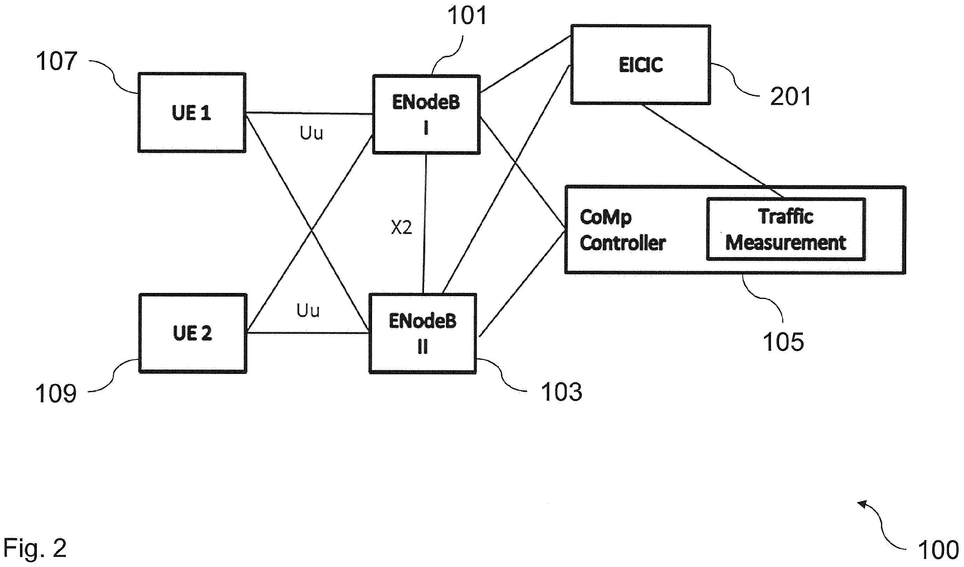

Fig. 2 zeigt ein schematisches Diagramm eines Kommunikationssystems 100 für die Kommunikation in einem Kommunikationsnetzwerk.

Das Kommunikationssystem 100 umfasst eine erste Basisstation 101, welche für eine Kommunikation eines ersten Kommunikationsgerätes 107 in dem Kommunikationsnetzwerk vorgesehen ist, wobei die erste Basisstation 101 eine erste Steuerungsschnittstelle für die Ressourcensteuerung aufweist. Das Kommunikationssystem 100 umfasst ferner eine zweite Basisstation 103, welche für eine Kommunikation eines zweiten Kommunikationsgerätes 109 in dem Kommunikationsnetzwerk vorgesehen ist, wobei die zweite Basisstation 103 eine zweite Steuerungsschnittstelle für die Ressourcensteuerung aufweist. Die erste Steuerungsschnittstelle und die zweite Steuerungsschnittstelle sind für eine Koordinierung der ersten Basisstation 101 und der zweiten Basisstation 103 in dem Kommunikationssystem 100 vorgesehen. Das Kommunikationssystem 100 umfasst ferner einen Controller 105, welcher ausgebildet ist, eine Zeitverzögerung in der Kommunikation zwischen der ersten Steuerungsschnittstelle und der zweiten Steuerungsschnittstelle zu ändern, um eine Datenrate in dem Kommunikationssystem 100 zu ändern. Die geänderte Datenrate kann dem ersten Kommunikationsgerät 107 oder dem zweiten Kommunikationsgerät 109 zugeordnet sein.

Das Kommunikationssystem 100 umfasst ferner eine Interferenzkoordinierungsentität 201. Die Interferenzkoordinierungsentität 201 ist ausgebildet, eine Interferenz zwischen der Kommunikation des ersten Kommunikationsgerätes 107 mit der ersten Basisstation 101 und der Kommunikation des zweiten Kommunikationsgerätes 109 mit der zweiten Basisstation 103 zu bestimmen. Die Interferenzkoordinierungsentität 201 ist ausgebildet, die Zeitverzögerung in der Kommunikation zwischen der ersten Steuerungsschnittstelle und der zweiten Steuerungsschnittstelle auf der Basis der bestimmten Interferenz zu ändern.

Alternativ oder zusätzlich zu der in Fig. 1 beschriebenen Ausführungsform kann die Zeitverzögerung der Steuerungsschnittstellen folglich mittels der Interferenzkoordinierungsentität 201 geändert werden. Die Interferenzkoordinierungsentität 201 kann eine Inter-Cell Interference Coordination (ICIC) Entität oder eine Enhanced Inter-Cell Interference Coordination (EICIC) Entität sein.

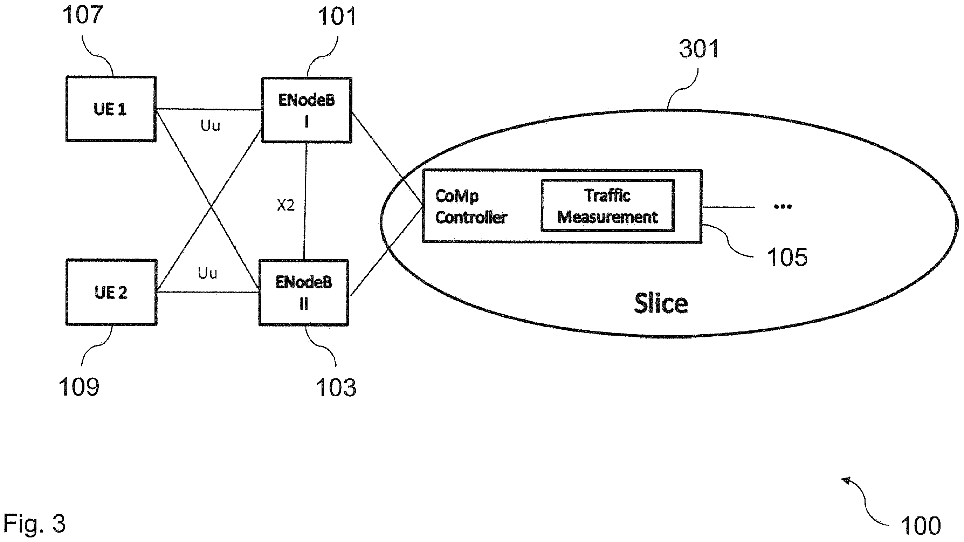

Fig. 3 zeigt ein schematisches Diagramm eines Kommunikationssystems 100 für die Kommunikation in einem Kommunikationsnetzwerk.

Das Kommunikationssystem 100 umfasst eine erste Basisstation 101, welche für eine Kommunikation eines ersten Kommunikationsgerätes 107 in dem Kommunikationsnetzwerk vorgesehen ist, wobei die erste Basisstation 101 eine erste Steuerungsschnittstelle für die Ressourcensteuerung aufweist. Das Kommunikationssystem 100 umfasst ferner eine zweite Basisstation 103, welche für eine Kommunikation eines zweiten Kommunikationsgerätes 109 in dem Kommunikationsnetzwerk vorgesehen ist, wobei die zweite Basisstation 103 eine zweite Steuerungsschnittstelle für die Ressourcensteuerung aufweist. Die erste Steuerungsschnittstelle und die zweite Steuerungsschnittstelle sind für eine Koordinierung der ersten Basisstation 101 und der zweiten Basisstation 103 in dem Kommunikationssystem 100 vorgesehen. Das Kommunikationssystem 100 umfasst ferner einen Controller 105, welcher ausgebildet ist, eine Zeitverzögerung in der Kommunikation zwischen der ersten Steuerungsschnittstelle und der zweiten Steuerungsschnittstelle zu ändern, um eine Datenrate in dem Kommunikationssystem 100 zu ändern. Die geänderte Datenrate kann dem ersten Kommunikationsgerät 107 oder dem zweiten Kommunikationsgerät 109 zugeordnet sein.

Das Kommunikationsnetzwerk umfasst ein Subnetzwerk 301, insbesondere ein Slice, wobei der Controller 105 dem Subnetzwerk 301, insbesondere dem Slice, zugeordnet ist. Dies ist insbesondere für Anwendungen in Kommunikationsnetzwerken der fünften Generation (5G) oder einer weiteren Generation vorteilhaft.

Die Einführung einer Zeitverzögerung auf den Steuerungsschnittstellen kann vorteilhaft zur Regulierung der Datenraten in dem Subnetzwerk 301, insbesondere dem Slice, für verschiedene Kommunikationsgeräte 107, 109 eingesetzt werden. Der Controller 105 kann über eine Slice-Edge-Funktionalität verfügen, sodass die Änderung der Datenrate innerhalb desselben Subnetzwerks 301, insbesondere derselben Slice, spezifisch für das Kommunikationsgerät 107, 109 oder den Benutzer durchgeführt werden kann. Folglich kann die Datenrate gedrosselt werden, falls ein Benutzer ein Datenvolumen für das jeweilige Subnetzwerk 301, insbesondere die jeweilige Slice, überschritten hat.

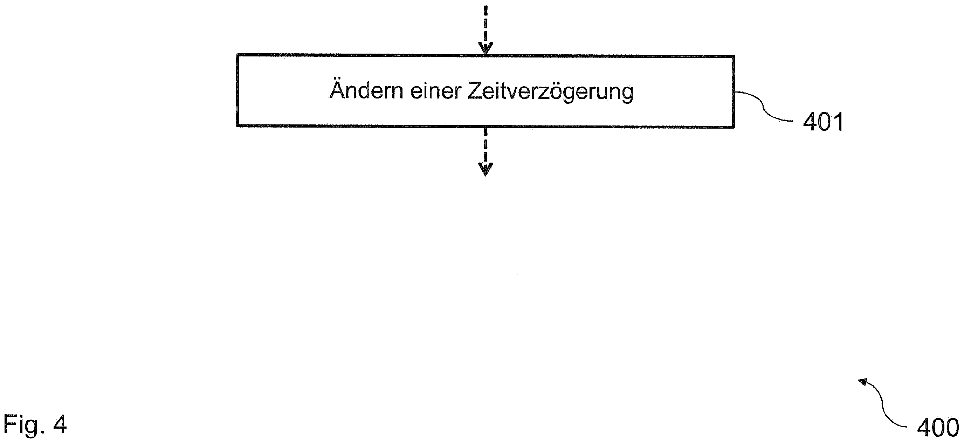

Fig. 4 zeigt ein schematisches Diagramm eines Verfahrens 400 für die Kommunikation in einem Kommunikationsnetzwerk unter Verwendung eines Kommunikationssystems.

Das Kommunikationssystem umfasst eine erste Basisstation, eine zweite Basisstation und einen Controller. Die erste Basisstation ist für eine Kommunikation eines ersten Kommunikationsgerätes in dem Kommunikationsnetzwerk vorgesehen, wobei die erste Basisstation eine erste Steuerungsschnittstelle für die Ressourcensteuerung aufweist. Die zweite Basisstation ist für eine Kommunikation eines zweiten Kommunikationsgerätes in dem Kommunikationsnetzwerk vorgesehen, wobei die zweite Basisstation eine zweite Steuerungsschnittstelle für die Ressourcensteuerung aufweist. Die erste Steuerungsschnittstelle und die zweite Steuerungsschnittstelle sind für eine Koordinierung der ersten Basisstation und der zweiten Basisstation in dem Kommunikationssystem vorgesehen.

Das Verfahren 400 umfasst ein Ändern 401 einer Zeitverzögerung in der Kommunikation zwischen der ersten Steuerungsschnittstelle und der zweiten Steuerungsschnittstelle durch den Controller, um eine Datenrate in dem Kommunikationssystem zu ändern.

### BEZUGSZEICHENLISTE

- 100: Kommunikationssystem
- 101: Erste Basisstation
- 103: Zweite Basisstation
- 105: Controller
- 107: Erstes Kommunikationsgerät
- 109: Zweites Kommunikationsgerät

- 201: Interferenzkoordinierungsentität

- 301: Subnetzwerk

- 400: Verfahren für die Kommunikation in einem Kommunikationsnetzwerk
- 401: Ändern einer Zeitverzögerung

## Patentansprüche

1. Kommunikationssystem (100) für die Kommunikation in einem Kommunikationsnetzwerk, mit:
einer ersten Basisstation (101), welche für eine Kommunikation eines ersten Kommunikationsgerätes (107) in dem Kommunikationsnetzwerk vorgesehen ist, wobei die erste Basisstation (101) eine erste Steuerungsschnittstelle für ihre Ressourcensteuerung aufweist;
einer zweiten Basisstation (103), welche für eine Kommunikation eines zweiten Kommunikationsgerätes (109) in dem Kommunikationsnetzwerk vorgesehen ist, wobei die zweite Basisstation (103) eine zweite Steuerungsschnittstelle für ihre Ressourcensteuerung aufweist;
wobei die erste Steuerungsschnittstelle und die zweite Steuerungsschnittstelle für eine Koordinierung der ersten Basisstation (101) und der zweiten Basisstation (103) in dem Kommunikationssystem (100) vorgesehen sind;
und
einem Controller (105), welcher ausgebildet ist, eine Zeitverzögerung in der Kommunikation zwischen der ersten Steuerungsschnittstelle und der zweiten Steuerungsschnittstelle zu ändern, um eine Datenrate der Kommunikationsgeräte (107, 109) zu ändern.

2. Kommunikationssystem (100) nach Anspruch 1, wobei die erste Steuerungsschnittstelle und die zweite Steuerungsschnittstelle X2-Schnittstellen sind.

3. Kommunikationssystem (100) nach einem der vorstehenden Ansprüche, wobei die erste Basisstation (101) ferner für eine Kommunikation mit dem zweiten Kommunikationsgerät (109) in dem Kommunikationsnetzwerk vorgesehen ist, und wobei die zweite Basisstation (103) ferner für eine Kommunikation mit dem ersten Kommunikationsgerät (107) in dem Kommunikationsnetzwerk vorgesehen ist.

4. Kommunikationssystem (100) nach Anspruch 3, wobei der Controller (105) ein Coordinated Multi-Point (CoMP) Controller ist.

5. Kommunikationssystem (100) nach einem der Ansprüche 3 oder 4, wobei der Controller (105) ausgebildet ist, eine erste kumulierte Datenrate des ersten Kommunikationsgerätes (107) auf der Basis einer ersten Teildatenrate zwischen dem ersten Kommunikationsgerät (107) und der ersten Basisstation (101) und einer zweiten Teildatenrate zwischen dem ersten Kommunikationsgerät (107) und der zweiten Basisstation (103) zu bestimmen, und wobei der Controller (105) ausgebildet ist, eine zweite kumulierte Datenrate des zweiten Kommunikationsgerätes (109) auf der Basis einer dritten Teildatenrate zwischen dem zweiten Kommunikationsgerät (109) und der ersten Basisstation (101) und einer vierten Teildatenrate zwischen dem zweiten Kommunikationsgerät (109) und der zweiten Basisstation (103) zu bestimmen.

6. Kommunikationssystem (100) nach Anspruch 5, wobei der Controller (105) ausgebildet ist, die erste kumulierte Datenrate oder die zweite kumulierte Datenrate mit einem vorbestimmten Schwellwert zu vergleichen, und die Zeitverzögerung in der Kommunikation zwischen der ersten Steuerungsschnittstelle und der zweiten Steuerungsschnittstelle zu ändern, falls die erste kumulierte Datenrate oder die zweite kumulierte Datenrate den vorbestimmten Schwellwert überschreitet.

7. Kommunikationssystem (100) nach einem der vorstehenden Ansprüche, wobei die erste Basisstation (101) oder die zweite Basisstation (103) ausgebildet ist, ein Zeitverzögerungssignal von dem Controller (105) zu empfangen, und, ansprechend auf den Empfang des Zeitverzögerungssignals, die Kommunikation zwischen der ersten Steuerungsschnittstelle und der zweiten Steuerungsschnittstelle um eine vorbestimmte Zeitdauer zu verzögern.

8. Kommunikationssystem (100) nach einem der vorstehenden Ansprüche, wobei die erste Steuerungsschnittstelle oder die zweite Steuerungsschnittstelle ein steuerbares Zeitverzögerungselement aufweist, und wobei der Controller (105) ausgebildet ist, das steuerbare Zeitverzögerungselement zu steuern.

9. Kommunikationssystem (100) nach einem der vorstehenden Ansprüche, mit:
einer Interferenzkoordinierungsentität (201), welche ausgebildet ist, eine Interferenz zwischen der Kommunikation des ersten Kommunikationsgerätes (107) mit der ersten Basisstation (101) und der Kommunikation des zweiten Kommunikationsgerätes (109) mit der zweiten Basisstation (103) zu bestimmen, wobei die Interferenzkoordinierungsentität (201) ausgebildet ist, die Zeitverzögerung in der Kommunikation zwischen der ersten Steuerungsschnittstelle und der zweiten Steuerungsschnittstelle auf der Basis der bestimmten Interferenz zu ändern.

10. Kommunikationssystem (100) nach Anspruch 9, wobei die Interferenzkoordinierungsentität (201) eine Inter-Cell Interference Coordination (ICIC) Entität oder eine Enhanced Inter-Cell Interference Coordination (EICIC) Entität ist.

11. Kommunikationssystem (100) nach einem der vorstehenden Ansprüche, wobei die erste Basisstation (101) und die zweite Basisstation (103) Evolved Node Bs (eNodeBs) sind.

12. Kommunikationssystem (100) nach einem der vorstehenden Ansprüche, wobei das Kommunikationsnetzwerk ein Long Term Evolution (LTE) Kommunikationsnetzwerk ist.

13. Kommunikationssystem (100) nach einem der vorstehenden Ansprüche, wobei das Kommunikationsnetzwerk ein Subnetzwerk (301), insbesondere ein Slice, umfasst, und wobei der Controller (105) dem Subnetzwerk (301), insbesondere dem Slice, zugeordnet ist.

14. Verfahren (400) für die Kommunikation in einem Kommunikationsnetzwerk unter Verwendung eines Kommunikationssystems (100), wobei das Kommunikationssystem (100) eine erste Basisstation (101), eine zweite Basisstation (103) und einen Controller (105) umfasst, wobei die erste Basisstation (101) für eine Kommunikation eines ersten Kommunikationsgerätes (107) in dem Kommunikationsnetzwerk vorgesehen ist, wobei die erste Basisstation (101) eine erste Steuerungsschnittstelle für ihre Ressourcensteuerung aufweist, wobei die zweite Basisstation (103) für eine Kommunikation eines zweiten Kommunikationsgerätes (109) in dem Kommunikationsnetzwerk vorgesehen ist, wobei die zweite Basisstation (103) eine zweite Steuerungsschnittstelle für ihre Ressourcensteuerung aufweist, und wobei die erste Steuerungsschnittstelle und die zweite Steuerungsschnittstelle für eine Koordinierung der ersten Basisstation (101) und der zweiten Basisstation (103) in dem Kommunikationssystem (100) vorgesehen sind, mit:
Ändern (401) einer Zeitverzögerung in der Kommunikation zwischen der ersten Steuerungsschnittstelle und der zweiten Steuerungsschnittstelle durch den Controller (105), um eine Datenrate der Kommunikationsgeräte (107, 109) zu ändern.

15. Computerprogramm mit einem Programmcode zum Ausführen des Verfahrens (400) nach Anspruch 14, wenn der Programmcode durch einen Prozessor ausgeführt wird.

## Claims

1. Communication system (100) for the communication in a communication network, having:
a first base station (101) provided for a communication of a first communication device (107) in the communication network, wherein the first base station (101) has a first control interface for its resource control;
a second base station (103) provided for a communication of a second communication device (109) in the communication network, wherein the second base station (103) has a second control interface for its resource control;
wherein the first control interface and the second control interface are provided for a coordination of the first base station (101) and the second base station (103) in the communication system (100);
and
a controller (105) configured to change a time delay in the communication between the first control interface and the second control interface in order to change a data rate of the communication devices (107, 109).

2. Communication system (100) according to Claim 1, wherein the first control interface and the second control interface are X2 interfaces.

3. Communication system (100) according to either of the preceding claims, wherein the first base station (101) is further provided for a communication with a second communication device (109) in the communication network, and wherein the second base station (103) is further provided for a communication with the first communication device (107) in the communication network.

4. Communication system (100) according to Claim 3, wherein the controller (105) is a Coordinated Multi-Point (CoMP) controller.

5. Communication system (100) according to either of Claims 3 and 4, wherein the controller (105) is configured to determine a first cumulated data rate of the first communication device (107) on the basis of a first partial data rate between the first communication device (107) and the first base station (101) and a second partial data rate between the first communication device (107) and the second base station (103), and wherein the controller (105) is configured to determine a second cumulated data rate of the second communication device (109) on the basis of a third partial data rate between the second communication device (109) and the first base station (101) and a fourth partial data rate between the second communication device (109) and the second base station (103).

6. Communication system (100) according to Claim 5, wherein the controller (105) is configured to compare the first cumulated data rate or the second cumulated data rate with a predetermined threshold value, and to change the time delay in the communication between the first control interface and the second control interface if the first cumulated data rate or the second cumulated data rate exceeds the predetermined threshold value.

7. Communication system (100) according to one of the preceding claims, wherein the first base station (101) or the second base station (103) is configured to receive a time delay signal from the controller (105) and, in response to the reception of the time delay signal, to delay the communication between the first control interface and the second control interface by a predetermined period.

8. Communication system (100) according to one of the preceding claims, wherein the first control interface or the second control interface has a controllable time delay element, and wherein the controller (105) is configured to control the controllable time delay element.

9. Communication system (100) according to one of the preceding claims, having:
an interference coordination entity (201) configured to determine an interference between the communication of the first communication device (107) with the first base station (101) and the communication of the second communication device (109) with the second base station (103), wherein the interference coordination entity (201) is configured to change the time delay in the communication between the first control interface and the second control interface on the basis of the determined interference.

10. Communication system (100) according to Claim 9, wherein the interference coordination entity (201) is an Inter-Cell Interference Coordination (ICIC) entity or an Enhanced Inter-Cell Interference Coordination (EICIC) entity.

11. Communication system (100) according to one of the preceding claims, wherein the first base station (101) and the second base station (103) are Evolved Node Bs (eNodeBs).

12. Communication system (100) according to one of the preceding claims, wherein the communication network is a Long Term Evolution (LTE) communication network.

13. Communication system (100) according to one of the preceding claims, wherein the communication network comprises a subnetwork (301), in particular a slice, and wherein the controller (105) is associated with the subnetwork (301), in particular the slice.

14. Method (400) for the communication in a communication network using a communication system (100), wherein the communication system (100) comprises a first base station (101), a second base station (103) and a controller (105), wherein the first base station (101) is provided for a communication of a first communication device (107) in the communication network, wherein the first base station (101) has a first control interface for its resource control, wherein the second base station (103) is provided for a communication of a second communication device (109) in the communication network, wherein the second base station (103) has a second control interface for its resource control, and wherein the first control interface and the second control interface are provided for a coordination of the first base station (101) and the second base station (103) in the communication system (100), involving:
changing (401) a time delay in the communication between the first control interface and the second control interface by means of the controller (105) in order to change a data rate of the communication devices (107, 109).

15. Computer program having a program code for carrying out the method (400) according to Claim 14 when the program code is executed by a processor.

## Revendications

1. Système de communication (100) pour la communication dans un réseau de communication, comprenant :
une première station de base (101) qui est conçue pour une communication d'un premier appareil de communication (107) dans le réseau de communication, la première station de base (101) possédant une première interface de commande pour la commande de ses ressources ;
une deuxième station de base (103) qui est conçue pour une communication d'un deuxième appareil de communication (109) dans le réseau de communication, la deuxième station de base (103) possédant une deuxième interface de commande pour la commande de ses ressources ;
la première interface de commande et la deuxième interface de commande étant conçues pour une coordination de la première station de base (101) et de la deuxième station de base (103) dans le système de communication (100) ;
et
un contrôleur (105) qui est configuré pour modifier un retard dans le temps dans la communication entre la première interface de commande et la deuxième interface de commande afin de modifier un débit de données des appareils de communication (107, 109).

2. Système de communication (100) selon la revendication 1, la première interface de commande et la deuxième interface de commande étant des interfaces X2.

3. Système de communication (100) selon l'une des revendications précédentes, la première station de base (101) étant en outre conçue pour une communication avec le deuxième appareil de communication (109) dans le réseau de communication et la deuxième station de base (103) étant en outre conçue pour une communication avec le premier appareil de communication (107) dans le réseau de communication.

4. Système de communication (100) selon la revendication 3, le contrôleur (105) étant un contrôleur coordonné multipoint (CoMP).

5. Système de communication (100) selon l'une des revendications 3 ou 4, le contrôleur (105) étant configuré pour déterminer un premier débit de données cumulé du premier appareil de communication (107) sur la base d'un premier débit de données partiel entre le premier appareil de communication (107) et la première station de base (101) et d'un deuxième débit de données partiel entre le premier appareil de communication (107) et la deuxième station de base (103), et le contrôleur (105) étant configuré pour déterminer un deuxième débit de données cumulé du deuxième appareil de communication (109) sur la base d'un troisième débit de données partiel entre le deuxième appareil de communication (109) et la première station de base (101) et d'un quatrième débit de données partiel entre le deuxième appareil de communication (109) et la deuxième station de base (103).

6. Système de communication (100) selon la revendication 5, le contrôleur (105) étant configuré pour comparer le premier débit de données cumulé ou le deuxième débit de données cumulé avec une valeur de seuil prédéterminée et modifier le retard dans le temps dans la communication entre la première interface de commande et la deuxième interface de commande dans le cas où le premier débit de données cumulé ou le deuxième débit de données cumulé dépasse la valeur de seuil prédéterminée.

7. Système de communication (100) selon l'une des revendications précédentes, la première station de base (101) ou la deuxième station de base (103) étant configurée pour recevoir un signal de retard dans le temps de la part du contrôleur (105) et, en réaction à la réception du signal de retard dans le temps, retarder la communication entre la première interface de commande et la deuxième interface de commande d'une durée prédéterminée.

8. Système de communication (100) selon l'une des revendications précédentes, la première interface de commande et la deuxième interface de commande possédant un élément de retard dans le temps commandable et le contrôleur (105) étant configuré pour commander l'élément de retard dans le temps commandable.

9. Système de communication (100) selon l'une des revendications précédentes, comprenant :
une entité de coordination de brouillage (201) qui est configurée pour déterminer un brouillage entre la communication du premier appareil de communication (107) avec la première station de base (101) et la communication du deuxième appareil de communication (109) avec la deuxième station de base (103), l'entité de coordination de brouillage (201) étant configurée pour modifier le retard dans le temps dans la communication entre la première interface de commande et la deuxième interface de commande en fonction du brouillage déterminé.

10. Système de communication (100) selon la revendication 9, l'entité de coordination de brouillage (201) étant une entité de coordination de brouillage intercellulaire (ICIC) ou une entité de coordination de brouillage intercellulaire améliorée (EICIC).

11. Système de communication (100) selon l'une des revendications précédentes, la première station de base (101) et la deuxième station de base (103) étant des stations de base à noeud évolué (eNodeBs).

12. Système de communication (100) selon l'une des revendications précédentes, le réseau de communication étant un réseau de communication à évolution à long terme (LTE) .

13. Système de communication (100) selon l'une des revendications précédentes, le réseau de communication comprenant un sous-réseau (301), notamment une tranche, et le contrôleur (105) étant associé au sous-réseau (301), notamment à la tranche.

14. Procédé (400) pour la communication dans un réseau de communication en utilisant un système de communication (100), le système de communication (100) comprenant une première station de base (101), une deuxième station de base (103) et un contrôleur (105), la première station de base (101) étant conçue pour une communication d'un premier appareil de communication (107) dans le réseau de communication, la première station de base (101) possédant une première interface de commande pour la commande de ses ressources, la deuxième station de base (103) étant conçue pour une communication d'un deuxième appareil de communication (109) dans le réseau de communication, la deuxième station de base (103) possédant une deuxième interface de commande pour la commande de ses ressources, et la première interface de commande et la deuxième interface de commande étant conçues pour une coordination de la première station de base (101) et de la deuxième station de base (103) dans le système de communication (100), comprenant :
la modification (401) d'un retard dans le temps dans la communication entre la première interface de commande et la deuxième interface de commande par le contrôleur (105) afin de modifier un débit de données des appareils de communication (107, 109).

15. Programme informatique comprenant un code de programme destiné à mettre en oeuvre le procédé (400) selon la revendication 14 lorsque le code de programme est exécuté par un processeur.
